# EUROPÄISCHE PATENTSCHRIFT

(11) **EP 3 194 305 B1**
(45) Veröffentlichungstag und Bekanntmachung des Hinweises auf die Patenterteilung: **07.06.2023**
(21) Anmeldenummer: 15762637.5
(22) Anmeldetag: 14.09.2015
(51) Int. Cl.: B65G 1/137

(54) **NACHSCHUBVERFAHREN FÜR PALETTIERVORRICHTUNGEN IN VERTEILZENTREN**
SUPPLY METHOD FOR PALETTIZING DEVICES IN DISTRIBUTION CENTERS
PROCÉDÉ D'ALIMENTATION DE PALETTISEURS DANS DES CENTRES DE DISTRIBUTION

(30) Priorität: 15.09.2014 DE 102014113271
(43) Veröffentlichungstag der Anmeldung: 26.07.2017
(73) Patentinhaber: Dematic GmbH, 63150 Heusenstamm (DE)
(72) Erfinder: MEURER, Hans Christoph, 64380 Roßdorf (DE)
(74) Vertreter: Moser Götze & Partner Patentanwälte mbB
(86) Internationale Anmeldenummer: PCT/EP2015/070956
(87) Internationale Veröffentlichungsnummer: WO 2016/041903

(56) Entgegenhaltungen:
- EP-A1- 1 486 435
- WO-A1-2012/156355
- DE-A1- 19 719 651
- DE-A1-102006 025 620
- DE-A1-102008 035 178
- US-A1- 2012 141 236
- Viastore Systems Gmbh: "Système de flux de matériaux viad@tMFC | viastore", , 2. August 2013 (2013-08-02), XP055205849, Gefunden im Internet: URL:http://www.viastore.fr/systeme-de-gest ion-dentrepot-wms/systeme-de-flux-de-mater iaux-viadat-mfc/ [gefunden am 2015-08-03]

## Beschreibung

Die Erfindung betrifft ein Nachschubverfahren für Palettiervorrichtungen in Verteilzentren nach Anspruch 1.

Das, ggf. automatische, Bestapeln einer Unterlage oder eines Trägers, insbesondere einer Palette oder eines Rollwagens, mit Packstücken zum Ausbilden eines Stapels zum späteren Versand, also das "Palettieren" ist an sich bekannt. Hierbei werden jedoch Packstücke mit uniformer Größe bzw. Ausmaß manuell oder durch Roboter, Greifer etc. auf rechnerisch bestimmte Plätze abgelegt.

Bei dem Prozess des Beladens eines Ladungsträgers mit Packstücken unterschiedlicher Ausprägung zum Ausbilden eines Stapels handelt es sich dagegen um das sogenannte "mixed-case" Palettieren.

In der heutigen Distributionslogistik werden immer größere Anforderungen an die Kommissionierung gestellt. Es ist daher notwendig Kommissioniersysteme zu entwickeln, die automatisch ohne manuelles Einwirken Aufträge abarbeiten.

Für die Palettierung werden dazu immer häufiger automatische Systeme eingesetzt. Solche sind z.B. aus der EP 1 462 394 B1, WO 2010/059923 A1 und WO 2008/068264 A1 oder auch WO 2014/005895 A1 bekannt.

WO 2012/156355 A1 offenbart ein Verfahren gemäß dem Oberbegriff des Anspruchs 1, d.h. ein Verfahren zum Lagern und/oder Kommissionieren von Wareneinheiten in einer Lager- und/oder Kommissionieranlage, in welcher ankommende Transporteinheiten in einem Speicherlager zwischengelagert werden, bei Bedarf einer Depalletierstation zugeführt und einzeln in einem Pufferlager für Wareneinheiten zwischengelagert werden. Anschliessend werden automatisch filialspezifische Mischpaletten erstellt, der Bereitstellzone zugeführt und auf LKW geladen. Die Systemlösung zeichnet sich insbesondere dadurch aus, dass sie gänzlich auf Transporthilfsmittel wie Tablare für Wareneinheiten, Reihen von Wareneinheiten oder für ganze Layer von Transporteinheiten verzichten kann. Die vorgesehenen Transportshuttles und die Schienenanlage übernehmen weitgehend die Funktionen von Transporthilfsmitteln, Speichermitteln und Fördersystemen.

Tausende von verschiedenen Produkten (bzw. Packstücke) unterschiedlichster Ausprägung (Größe, Form, Gewicht, Abmessungen, Oberflächen, Festigkeit etc.) müssen mit solchen Systemen automatisch kommissioniert werden.

In automatisierten Warenlagern bzw. Warenverteilzentren wird eine Vielzahl unterschiedlichster Waren vorgehalten, die bedarfsgerecht nach Bestellung in eine maßgeschneiderte Kundenlieferung zusammengestellt d.h. kommissioniert werden.

Im Warenverteilzentrum werden in der Regel sogenannte sortenreine Paletten angeliefert und dort zwischengelagert. Die sortenreinen Paletten umfassen in der Regel mehrere Verpackungen, die beispielsweise lagenweise palettiert sind. Für die Zwischenlagerung werden oft sogenannte Hochregallager verwendet, die als mehrstöckige Bauwerke ausgebildet sind. In den Hochregallagern werden Regalbediengeräte verwendet, um jeweils eine komplette Palette aus dem Hochregallager herauszunehmen und einer Vereinzelungsstation zuzuführen. Andere entsprechende Möglichkeiten der Palettenlagerung sind ebenfalls denkbar.

Hierbei müssen unterschiedliche Aspekte berücksichtigt werden, die die Komplexität gegenüber dem "einfachen" manuellen Stapeln einfacher regelmäßiger Geometrien enorm erhöhen. So kann ein nachfolgendes Packstück nur gut auf ein vorheriges Packstück gestapelt bzw. abgelegt werden, wenn diese eine flache bzw. ebene Oberfläche aufweist, die zudem etwa waagerecht ausgerichtet sein sollte, und wenn das Packstück das Gewicht der auf ihm abgelegten weiteren Packstücke ohne Beschädigung tragen kann.

Ferner sollte der gebildete Stapel eine gewisse Stabilität aufweisen, u. a. damit er beim Transport nicht umfällt. Eine Umwicklung mit Folie hilft zwar, kann aber nicht alleine einen fehlerhaft gebildeten Stapel stabilisieren.

Zudem wird abnehmerseitig immer häufiger eine Optimierung der Stapel aufgrund der gewünschten Entladereihenfolge gewünscht. Dazu hat sich herausgestellt, dass ein sogenanntes Shop-Layout des Lagers vorteilhaft ist. Insbesondere im Lebensmittelsektor werden solche Lagerorganisationen verwendet, da dort die Produktvielfalt extrem hoch ist und die Entladereihenfolge im Supermarkt vorgegeben ist. Es werden bei einem Shop-Layout die verschiedenen Produkte dabei wie im Laden angeordnet, also nach Produktfamilien gruppiert in bestimmten Gassen angeordnet, die der Reihenfolge im Ladenlokal entsprechen. Es werden also mit anderen Worten die verschiedenen Waren im Warenlager gruppiert so in den Gassen in gleicher Folge angeordnet, wie in den Gängen des Supermarktes. Es werden also im Lager verschiedene Waren zu gemeinsamen Warengruppen organisiert in räumlicher Nähe, üblicher Weise in derselben oder angrenzenden Gassen, angeordnet bzw. gelagert.

Problematisch ist zusätzlich bei einem Shop-Layout des Warenlagers im Verteilzentrum die damit einhergehende Änderung des Flusses und der Verteilung der Waren. Die Waren sind nicht mehr homogen über das Lager bzw. chaotisch verteilt, sondern in bestimmten Artikelgruppen in Gassen organisiert, wobei die Anordnung in den Gassen selber chaotisch erfolgt.

Die eingesetzten Palettieralgorithmen und -automaten zur Stapelbildung erlauben es zwar bereits relativ stabile Stapel mit vorgegebener Ordnung zu bilden und besitzen sehr hohe Leistungen bzw. Durchsätze.

Sie benötigen aber einen kontinuierlichen Strom von Produkten aus den entsprechenden Gassen, wozu diese wiederum Nachschub benötigen bzw. gefüllt sein müssen.

Zu berücksichtigen ist auch eine Verteilung eines Auftrags auf mehrere Paletten, wie es bei der Versorgung von Supermärkten meist der Fall ist.

Üblicherweise erfolgt die Versorgung der Palettiervorrichtungen mit Waren in einen Warenlager wie folgt:
Zunächst werden am Wareneingang sortenreine Paletten angeliefert und zwischengelagert. Die sortenreinen Paletten umfassen in der Regel mehrere Verpackungen, die beispielsweise lagenweise palettiert sind. Für die Zwischenlagerung werden die Paletten in Hochregallager transportiert. Dort verwendet man zur Ein- und Auslagerung der Paletten Regalbediengeräte.

Werden Waren von der entsprechenden Palette benötigt, so wird die Palette ausgelagert und in einem Depalettierer meist lagenweise depalettiert und anschließend die Waren vereinzelt.

Anschließend werden die Waren in einem Pufferlager zwischengelagert, bis ein entsprechender Auftrag tatsächlich zur Abarbeitung ansteht bzw. alle Waren vorrätig sind. Die Pufferlager sind üblicherweise automatische Kleinteilelager (AKL) oder Shuttlelager, in denen die Waren einzeln und gezielt nach einer vorgegebenen Sequenz (beeinflusst z.B. von der Beladereihenfolge an der Palette) ausgelagert werden können.

Liegt eine Bestellung bzw. ein Auftrag vor, dann wird aufgrund der bestellten Waren und der gewünschten Reihenfolge der Entladung eine Bestapelung der Palette bzw. des Rollwagen errechnet, wozu ein Palettieralgorithmus des Lagerverwaltungssystems im Voraus eine Reihenfolge und Anordnung der einzelnen Waren im Stapel festlegt.

Anschließend werden die unterschiedlichen Artikeln/Waren aus dem Pufferlager abgerufen und in der berechneten Reihenfolge einem Palettierautomat oder einer manuellen Palettiereinrichtung zugeführt.

Die im Pufferlager nun fehlenden Waren werden wieder aus dem Palettenlager aufgefüllt.

Dazu werden die Waren nach Gängigkeit und ggf. weiterer Kriterien (z.B. Volumen) eingeteilt und die Anzahl der zu depalettierenden Teile (ganze Palette, halbe Palette, eine Lage etc.) bestimmt. Dieses Verfahren führt mit den anderen Lagerstrategien (vgl. oben), insbesondere dem Shop-Layout, dazu, dass die Warenstruktur von Gasse zu Gasse im Pufferlager schwankt (viele Langsamdreher vs. wenige Schnelldreher oder kleine vs. große Waren). Somit geht in den Lagergassen des Pufferlagers Kapazität verloren und es können benötigte Waren nicht untergebracht werden.

Eine Festlegung der Gängigkeit (Schnellläufer vs. Langsamläufer) der Waren kann z.B. mittels ABC Analyse erfolgen.

Die Auffüllung erfolgt bisher nur statistisch aufgrund der Historie; ist also ungenau und ggf. nicht treffend. Eine vorausschauende Vorhersage zur ausreichenden Versorgung ist z.B. nur für etwa 3 bis 4 Stunden möglich. Somit kann es zu Engpässen kommen, so dass die Palettierautomaten nicht ihre volle Leistung abrufen können. Bisher ist dieser Nachschubaspekt nur unzureichend gelöst.

Daher besteht die Aufgabe der vorliegenden Erfindung darin, ein Nachschubverfahren für Palettierautomaten in Verteilzentren bereitzustellen, mit eine bessere Versorgung der Palettierautomaten erreicht werden kann, auch wenn das Verteilzentrum ein Shop-Layout verwendet.

Diese Aufgabe wird durch das in Anspruch 1 wiedergegebene Verfahren gelöst.

Erfindungsgemäß ist erkannt worden, dass die Versorgung des Pufferlagers mit neuen Waren von den Paletten im Zwischenlager durch Auslagerung, Depalettierung und Vereinzelung mittels einer dynamischen Anpassung der Auslager- und Depalettiermenge erfolgt, es möglich ist, genügend Waren im Pufferlager vorzuhalten, um Aufträge am Palettierautomat verzögerungsfrei abzuarbeiten.

Mit anderen Worten, es wird erst kurz vor einer, statistisch mittels historischer Daten und üblicher Warengängigkeit, geplanten Depalettierung geprüft, ob die bisher eingeplante, zur Depalettierung vorgesehene Warenmenge für die jeweilige Gasse bzw. Artikelgruppe in der Gasse ausreichend ist. Es wird also bis zum letzt möglichen Zeitpunkt gewartet, um die genau benötigte Depalettiermenge festzulegen bzw. zu variieren.

Bei niedrigem Füllstand kann erfindungsgemäß entschieden werden, dass die geplante Depalettiermenge erhöht, oder bei hohem Füllstand verringert wird. Es ist also erkannt worden, dass so eine dynamisch optimierte Ausnutzung des Kommissionierlagers möglich ist.

Dabei wird zwischen Füllstand und Füllgrad unterschieden. Füllgrad bezieht sich auf den freien Platz im Pufferlager, während Füllstand sich auf die Menge an bestimmten Artikeln im Pufferlager bezieht.

Es wird also beim Nachfüllen des Pufferlagers nicht nur der aufgrund der Auftragsabarbeitung absinkende Füllstand mit Artikeln berücksichtigt, sondern auch der Füllgrad des Pufferlagers. Bei hohem Füllgrad werden weniger Artikel depalettiert und bei niedrigem Füllgrad mehr.

Erfindungsgemäß wird dabei nicht eine beliebige Depalettiermenge verändert bzw. bestimmt, sondern eine für das Warenlager und die spezifische Ware vorgegebene Mindestdepalettiermenge dynamisch zum Zeitpunkt der Depalettierung (also erst direkt vor der eigentlichen Depalettierung, vgl. oben) angepasst. Diese Mindestdepalettiermenge ist eine statistisch aufgrund der Historie des Auftragsbestands und des Warenlagers vorausberechnete Depalettiermenge, die mindestens depalettiert wird, um das Pufferlager mit Nachschub zu versorgen.

So erfolgt erfindungsgemäß die Anpassung der Depalettiermenge dynamisch aufgrund des Füllstands der jeweiligen Ware und/oder des Füllgrads der dem Depalettierer zugeordneten Gasse(n) des Pufferlagers. Hierbei wird auch die Gängigkeit berücksichtigt. Auch andere maßgebliche Wareneigenschaften, wie Volumen, Gewicht, Dichte etc. können in die Bestimmung der dynamischen Anpassung einfließen.

So wird dann die Depalettiermenge dynamisch aufgrund des Füllstands und des Füllgrads der dem Depalettierer zugeordneten Gassen des Pufferlagers mit der jeweiligen Ware verringert oder erhöht.

Eine solche Erhöhung erfolgt aber nicht übermäßig, sondern nur in einem vorgegebenen Rahmen, d.h. es wird z.B. eine, insbesondere für das Warenlager und die spezifische Ware vorgegebene, Maximaldepalettiermenge nicht überschritten, so dass immer Raum im Pufferlager für andere Waren bleibt.

Insbesondere hat sich herausgestellt, dass es sinnvoll ist, wenn stark gefüllte Gassen des Pufferlagers - also solche mit hohem Füllgrad - öfter aber mit kleinerer Warenmenge pro Nachschubvorgang versorgt werden, und analog weniger stark gefüllte Gassen des Pufferlagers seltener aber mit größerer Warenmenge pro Nachschubvorgang versorgt werden.

Der Nachschubbedarf kann zyklisch, in Abhängigkeit des Füllstands und/oder des Füllgrads des Pufferlagers oder ereignisgesteuert überprüft werden.

In einer besonders bevorzugten Variante werden im Pufferlager Ebenenregalbediengeräte vom Shuttle Typ verwendet, die einen Warenaustausch zwischen den Gassen über dedizierte Querförderplätze durch tiefere Einlagerung austauschen, wie dies in der eigenen DE 10 2012 107 176 A1 beschrieben ist. Somit kann weitestgehend auf Fördertechnik in der Vorzone verzichtet werden.

Vorzugsweise sind nur wenige, d.h. zwei bzw. drei aneinander grenzende Gassen des Pufferlagers an einen Palettierautomat angeschlossen. Ebenfalls ist es bevorzugt, wenn zwei bzw. drei Gassen des Pufferlagers an einen Depalettierer angeschlossen sind. Dies hat sich als gute Konfiguration für ein Shop-Layout herausgestellt.

Durch die Beschränkung einer Artikelfamilie auf wenige Gassen im Rahmen des Shop-Layouts werden die notwendigen Quertransporte zwischen den Gassen minimiert. Die Quertransporte könnten, wie üblich mit Fördertechnik in der Vorzone durchgeführt werden. Dann kann die Vorzone entlastet werden. Werden die Quertransporte aber, wie bevorzugt, mittels der dedizierten Querförderplätze und der Shuttle-Fahrzeuge ausgeführt, führt dies wiederum zu einer Verbesserung der Nutzung der Shuttle-Fahrzeuge u.a. für Ein- und Auslageraufgaben und die Vorzone kann komplett entfallen (vgl. oben).

Natürlich sind dafür auch andere Shuttle Typen wie Mehrebenenregalbediengeräte und Lager mit Vorzonen für den Quertransport einsetzbar.

Die Palettiervorrichtung kann eine manuelle Palettiereinrichtung, wie eine manuelle Dematic Ergopal Station sein, wie u.a. beschrieben in WO 2009/109218 A1. Vorzugsweise wird jedoch ein Palettierautomat verwendet, also eine automatische Palettiervorrichtung.

Es versteht sich, dass auch wenn der Begriff Palette bzw. Palettierung verwendet wurde, auch die Bestapelung anderer Unterlagen oder Träger, wie z.B. Rollwagen etc. mittels der Erfindung möglich ist und umfasst sein soll.

Weitere Merkmale und Einzelheiten der Erfindung ergeben sich aus der nachfolgenden Beschreibung der Zeichnung. Es zeigen:
- Fig. 1: ein schematisches Blockdiagramm des Aufbaus eines Verteilzentrums;
- Fig. 2: ein Flussdiagramm des Nachschubs eines Palettierautomaten aus Figur 1.

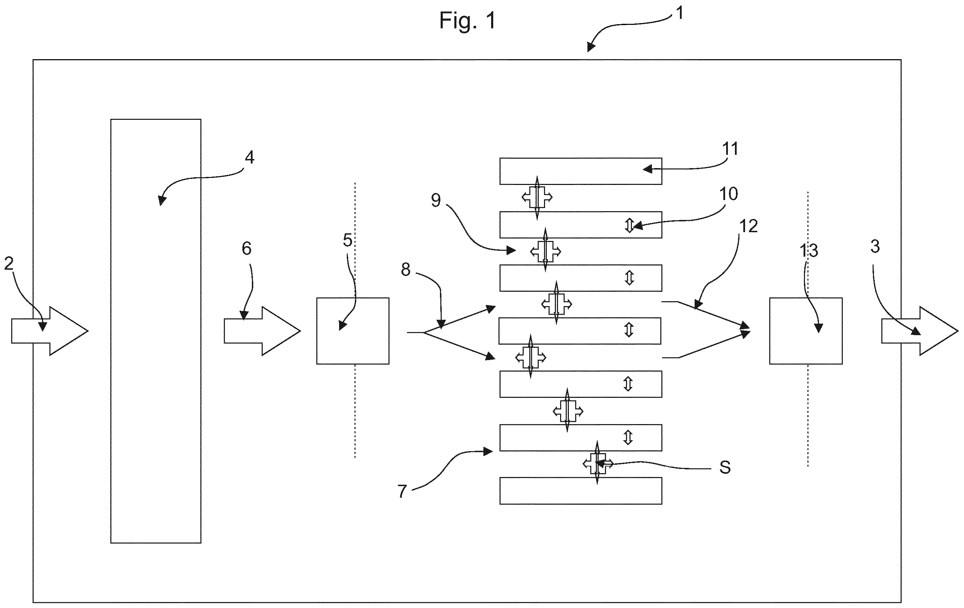

In der Figur 1 ist schematisch ein Blockdiagramm des Aufbaus eines als Ganzes mit 1 bezeichneten Verteilzentrums zur Versorgung von Supermärkten mit dem Warenstrom gezeigt.

Das Verteilzentrum 1 umfasst einen Wareneingang 2, an dem sortenreine Paletten angeliefert werden, und einen Warenausgang 3, an dem nach Kundenwunsch zusammengestellte, fertige Paletten und/oder Rollwagen verladen werden.

Die angelieferten Paletten werden zwischengelagert, wozu sie in ein Hochregallager 4 transportiert werden. Dort verwendet man zur Ein- und Auslagerung der Paletten Regalbediengeräte.

Das Hochregallager 4 ist mit Depalettierer 5 über Förderer 6 verbunden, so dass wenn Waren von einer entsprechenden Palette benötigt werden, diese Palette ausgelagert und in einem Depalettierer 5 meist lagenweise depalettiert und anschließend die Waren vereinzelt werden.

Der Begriff Ware umfasst u.a. Einzelartikel, Gebinde und Packungseinheiten wie z.B. 6-Packs, eingeschweißte Artikel etc. und auch kundenspezifisch (z. B. für eine Filiale) in Behälter oder Kartons kommissionierte Ware.

Anschließend werden die Waren in einem Pufferlager 7 zwischengelagert, bis ein entsprechender Auftrag tatsächlich zur Abarbeitung ansteht bzw. alle Waren vorrätig sind. Dazu sind die Depalettierer 5 mit dem Pufferlager 7 über Förderer 8 verbunden. Vorliegend ist jeder Depalettierer 5 an je zwei Gassen 9 des Pufferlagers 7 angeschlossen.

Das Pufferlager 7 ist ein Shuttlelager, in denen die Waren nach einem Shop-Layout gelagert werden. Im Pufferlager 7 werden Ebenenregalbediengeräte S vom Shuttle Typ verwendet, die einen Warenaustausch zwischen den Gassen 9 über dedizierte Querförderplätze 10 durch tiefere Einlagerung auf der einen Regalseite und normale Auslagerung auf der anderen Regelseite von aneinandergrenzenden Regalen 11 austauschen, so wie dies in der eigenen DE 10 2012 107 176 A1 beschrieben ist. Ein Austausch der Waren zwischen den Gassen 9 des Pufferlagers 7 erfolgt daher über die Ebenenregalbediengeräte S und die Querförderplätze 10.

Das Pufferlager 7 ist zur Auftragsabarbeitung bzw. der Paletten- bzw.

Rollwagenbestapelung über Förderer 12 mit Palettierautomaten 13 verbunden, wie sie z.B. aus der DE 10 2012 106 109 A1 bekannt sind. Zwei Gassen 9 des Pufferlagers 7 sind dazu an je einen Palettierautomat 13 angeschlossen.

Die Palettierautomaten 13 entsorgen fertige Paletten und Rollwagen über Förderer 14 an den Warenausgang 3.

Um die Abarbeitung der Aufträge für die Palettenzusammenstellung sicherzustellen, ist es notwendig, den Nachschub des Pufferlagers 7 mit Waren (z.B. aus dem Hochregallager 4) und somit der Palettierautomaten 13 sicherzustellen.

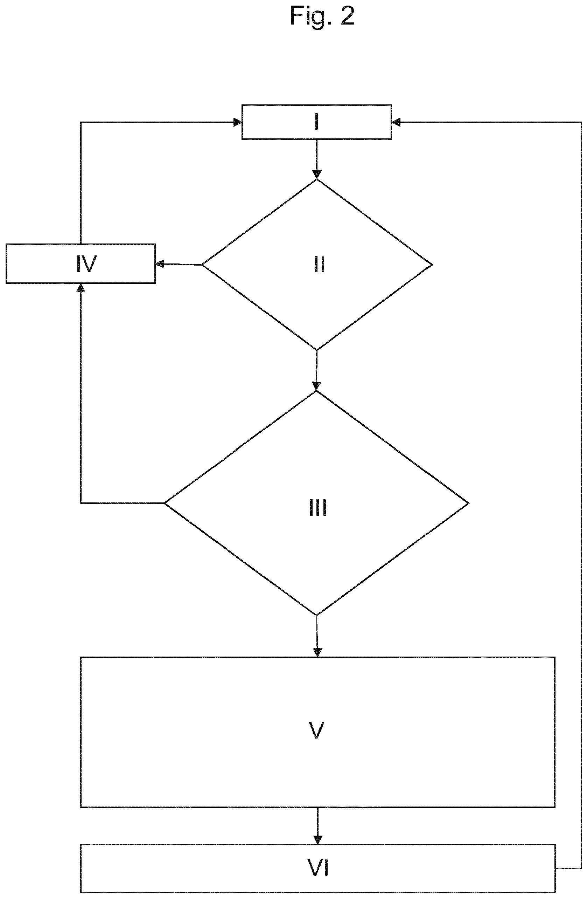

Dazu wird erfindungsgemäß wie folgt vorgegangen und anhand von Figur 2 erläutert.

Für jeden Depalettierer 5 wird ein Depalettierer-Arbeitsvorrat konfiguriert (Anzahl zu depalettierender Paletten / Lagen / Packungen) und entsprechend für die Nachschubsteuerung ein Palettierer-Arbeitsvorrat konfiguriert (Anzahl zu bearbeitender Aufträge / Auftragszeilen / Cases, Anzahl zu palettierender Paletten / Lagen / Packungen, erwartete Gesamt-Palettierungsdauer).

Aus diesem Palettierer-Arbeitsvorrat kann dynamisch für jeden Artikel der aktuelle Bedarf bestimmt werden. Ferner wird für jeden Artikel ein Optimalbestand konfiguriert. Der Optimalbestand kann berechnet werden, wenn für die Artikel Statistiken oder Prognosen der Verkaufsmengen (Bedarf in den Aufträgen des Verteilzentrums) vorliegen und für jeden Artikel eine gewünschte Reichweite festgelegt wird. Schnellläufer haben dann einen höheren und Langsamläufer einen niedrigeren Optimalbestand. Somit liegt eine vorgegebene Mindestdepalettiermenge vor.

Artikel werden zu Artikelfamilien im Shop-Layout im Pufferlager gruppiert (d.h. verschiedene Waren zu gemeinsamen Warengruppen organisiert in räumlicher Nähe, üblicher Weise in derselben oder angrenzenden Gassen, angeordnet bzw. gelagert), wobei für jede Artikelfamilie eine Liste der zugewiesenen Depalettierer 5 festgelegt wird. Jeder Depalettierer 5 wird dabei einer oder mehreren Artikelfamilien zugeordnet.

Für jeden einzelnen Depalettierer 5 wird zyklisch geprüft, ob ein weiterer Nachschubauftrag eingelastet werden kann bzw. muss.

Die Reihenfolge der auf Nachschub zu prüfenden Artikel im Palettier-Arbeitsvorrat wird durch die Priorität der Aufträge definiert.

Die Prüfung der Einlastung von Nachschubaufträgen kann auch ereignisgesteuert erfolgen (statt zyklisch), z.B. wenn der Depalettierer-Arbeitsvorrat sinkt oder der Palettierer-Arbeitsvorrat steigt.

Zur Prüfung, ob ein Artikel Nachschub benötigt wird, kann zusätzlich ein Mindestbestand pro Artikel konfiguriert und geprüft werden.

Für das Pufferlager 7 wird ein Soll-Füllgrad konfiguriert. Bei der Bestimmung der Nachschubmenge wird der aktuelle mittlere Füllgrad der für die zugehörige Artikelfamilie erlaubten Einlagergassen bestimmt. Ist dieser Füllgrad niedriger als der Sollwert, dann wird die Nachschubmenge erhöht. Ist der Füllgrad höher, dann wird die Nachschubmenge reduziert, wobei der aktuelle Bedarf jedoch erfüllt werden muss.

Es wird also nach dem Start (Schritt I) zunächst geprüft, ob der Depalettierer-Arbeitsvorrat ausreichend ist (Schritt II).

Wird dies bejaht, so wird nach einer Wartezeit (Zykluszeit, Schritt IV) die Überprüfung erneut gestartet.

Wird dies verneint, so wird im nächsten Schritt III geprüft, ob es im Palettierer-Arbeitsvorrat Artikel gibt, für die Nachschub benötigt wird.

Wird dies verneint, so wird nach einer Wartezeit (Zykluszeit, Schritt IV) die Überprüfung erneut gestartet.

Wird dies bejaht (Schritt V), so wird die benötigte Nachschubmenge bestimmt. Dazu wird die Menge aus der Differenz des Optimalbestands und des Ist-Bestands berechnet, wobei, falls der Bedarf größer als der Optimalbestand ist, die Menge als Differenz aus dem eigentlichen Bedarf und dem Bestand berechnet wird.

Es wird also beim Nachfüllen des Pufferlagers nicht nur der aufgrund der Auftragsabarbeitung absinkende Füllstand mit Artikeln berücksichtigt, sondern auch der

Füllgrad des Pufferlagers. Bei hohem Füllgrad werden weniger Artikel depalettiert und bei niedrigem Füllgrad mehr.

Dabei wird zweckmäßigerweise auf ganze Lagen, halbe Paletten oder ganze Paletten aufgerundet, die vom Depalettierer 5 zu liefern sind.

Die so berechnete Menge erfährt erfindungsgemäß eine dynamische Anpassung der Nachschubmenge.

Die dynamische Nachschubmenge ergibt sich aus der Multiplikation der bisher aus statistischen Daten berechneten Menge mit einem Skalierungsfaktor. Dieser Faktor ist 1, wenn der aktuelle Füllgrad des Artikels im Pufferlager dem Sollwert entspricht. Ist der Füllgrad niedriger als der Sollwert, dann ist der Faktor größer als 1. Ist der Füllgrad höher, dann ist der Faktor kleiner als 1. Geht der aktuelle Füllgrad gegen 100%, dann sollte der Skalierungsfaktor gegen 0 gehen.

So kann bei einem linearen Ansatz der Skalierungsfaktor berechnet werden als (100% - aktueller Füllgrad) / (100% - Soll-Füllgrad).

Für einen aktuellen Füllgrad von 60% und einen Sollwert von 80% ist der Skalierungsfaktor 2.0, d.h. die Nachschubmenge wird verdoppelt. Für einen aktuellen Füllgrad von 90% und einen Sollwert von 80% ist der Skalierungsfaktor 0.5, d.h. die Nachschubmenge wird halbiert.

Die so berechnete dynamisierte Menge wird nochmals auf zu depalettierende Paletteneinheiten gerundet.

Anschließend kann nun (im Schritt VI) eine Einlastung des Nachschubauftrags und eine Reservierung und Transport der Quellpalette aus dem Hochregallager zum Depalettierer usw. zur Versorgung des Pufferlagers erfolgen.

## Patentansprüche

1. Verfahren zur Versorgung einer Palettiervorrichtung (13) mit Waren zur auftragsbezogenen Palettierung in einem Warenlager oder Verteilzentrum (1), bei dem
- am Wareneingang (2) des Warenlagers Paletten angeliefert werden;
- die Paletten, insbesondere in einem Hochregallager (4), zwischengelagert werden;
- Paletten mit für die Auffüllung eines Pufferlagers (7) benötigten Waren aus dem Zwischenlager ausgelagert werden;
- in einem Depalettierer (5) die Waren, insbesondere lagenweise, von den Paletten depalettiert werden;
- anschließend die Waren vereinzelt werden;
- die vereinzelten Waren in einem mit Shop-Layout versehenem Pufferlager (7) mit Einzelzugriff gepuffert werden;
- das Pufferlager (7) mit der Palettiervorrichtung (13) zu deren auftragsbezogener Versorgung verbunden ist, wobei die für einen Auftrag benötigten Waren einzeln und gezielt nach einer vorgegebenen Sequenz ausgelagert und an die Palettiervorrichtung (13) transportiert werden,
**dadurch gekennzeichnet, dass**
die Versorgung des Pufferlagers (7) mit neuen Waren von den Paletten im Zwischenlager (4) durch Auslagerung, Depalettierung und Vereinzelung mittels einer dynamischen Anpassung der Auslager- und Mindestdepalettiermenge erfolgt, dass die Anpassung der Depalettiermenge dynamisch aufgrund des Füllstands mit der jeweiligen Ware und des Füllgrads der dem Depalettierer (5) zugeordneten Gasse (9) des Pufferlagers (7) erfolgt, dass die Depalettiermenge dynamisch aufgrund des Füllstands mit der jeweiligen Ware und des Füllgrads der dem Depalettierer (5) zugeordneten Gasse (9) des Pufferlagers (7) verringert oder erhöht wird, wobei stark gefüllte Gassen (9) des Pufferlagers (7) öfter aber mit kleinerer Warenmenge pro Nachschubvorgang versorgt werden,
wobei erst kurz vor einer geplanten Depalettierung statistisch mittels historischer Daten und üblicher Warengängigkeit geprüft wird, ob die bisher eingeplante, zur Depalettierung vorgesehene Warenmenge für die jeweilige Gasse bzw. Artikelgruppe in der Gasse ausreichend ist.

2. Verfahren nach Anspruch 1, **dadurch gekennzeichnet, dass** eine Maximaldepalettiermenge nicht überschritten wird.

3. Verfahren nach einem der vorhergehenden Ansprüche, **dadurch gekennzeichnet, dass** weniger stark gefüllte Gassen (9) des Pufferlagers (7) seltener aber mit größerer Warenmenge pro Nachschubvorgang versorgt werden.

4. Verfahren nach einem der vorhergehenden Ansprüche, **dadurch gekennzeichnet, dass** das Pufferlager (7) Ebenenregalbediengeräte (S) vom Shuttle Typ verwendet, die einen Warenaustausch zwischen den Gassen (9) über dedizierte Querförderplätze (10) durch tiefere Einlagerung austauschen.

5. Verfahren nach einem der vorhergehenden Ansprüche, **dadurch gekennzeichnet, dass** eine begrenzte Anzahl, insbesondere zwei Gassen (9) des Pufferlagers (7) an einen Palettierautomat (13) angeschlossen sind.

6. Verfahren nach einem der vorhergehenden Ansprüche, **dadurch gekennzeichnet, dass** eine begrenzte Anzahl, insbesondere zwei Gassen (9) des Pufferlagers (7) an einen Depalettierer (5) angeschlossen sind.

7. Verfahren nach einem der vorhergehenden Ansprüche, **dadurch gekennzeichnet, dass** die Palettiervorrichtung ein Palettierautomat (13) ist.

## Claims

1. Method of supplying a palletising device (13) with goods for order-related palletisation in a warehouse or distribution centre (1), in which
- pallets are delivered to the incoming goods area (2) of the warehouse;
- the pallets, in particular in a high-rack storage area (4), are temporarily stored;
- pallets containing goods required for replenishing a buffer storage area (7) are removed from storage in the temporary storage area;
- the goods are depalletised from the pallets, in particular layer-by-layer, in a depalletiser (5);
- the goods are then singulated;
- the singulated goods are buffered in a buffer storage area (7) which is provided with a shop layout and has individual access;
- the buffer storage area is connected to the palletising device (13) for the purpose of order-related supply thereof, wherein the goods required for an order are removed from storage and are transported to the palletising device (13) individually and in a controlled manner according to a specified sequence,
**characterised in that**
the buffer storage area (7) is supplied with new goods from the pallets in the temporary storage area (4) by removal from storage, depalletising and singulation by means of a dynamic adaptation of the quantity removed from storage and minimum quantity depalletised, that the depalletising quantity is adapted dynamically on the basis of the fill level of the respective product and the filling extent of the aisle (9) of the buffer storage area (7) allocated to the depalletiser (5),
that the depalletising quantity is dynamically reduced or increased on the basis of the fill level of the respective product and the filling extent of the aisle (9) of the buffer storage area (7) allocated to the depalletiser (5), wherein densely filled aisles (9) of the buffer storage area (7) are supplied frequently but with a smaller quantity of goods in each supply procedure, wherein only shortly before a planned depalletising procedure statistically by means of historical data and typical mobility of goods, a check carried out to establish whether the hitherto scheduled quantity of goods intended for depalletising for the respective aisle or article group in the aisle is sufficient.

2. Method as claimed in claim 1, **characterised in that** a maximum depalletising quantity is not exceeded.

3. Method as claimed in any one of the preceding claims, **characterised in that** less densely filled aisles (9) of the buffer storage area (7) are supplied less frequently but with a larger quantity of goods in each supply procedure.

4. Method as claimed in any one of the preceding claims, **characterised in that** the buffer storage area (7) utilises level racking serving apparatuses (S) of the shuttle type which exchange goods between the aisles (9) via dedicated cross-conveyance locations (10) by placing said goods more deeply into storage.

5. Method as claimed in any one of the preceding claims, **characterised in that** a limited number of aisles, in particular two aisles (9), of the buffer storage area (7) are connected to a palletising machine (13).

6. Method as claimed in any one of the preceding claims, **characterised in that** a limited number of aisles, in particular two aisles (9), of the buffer storage area (7) are connected to a depalletiser (5).

7. Method as claimed in any one of the preceding claims, **characterised in that** the palletising device is a palletising machine (13).

## Revendications

1. Procédé d'alimentation d'un dispositif de palettisation (13) en articles à palettiser en fonction des commandes dans un magasin ou un centre de distribution (1), procédé dans lequel
- des palettes sont livrées à l'entrée d'articles (2) du magasin;
- les palettes sont stockées temporairement, notamment dans un magasin à hauts rayonnages (4);
- des palettes pourvues des articles nécessaires au remplissage d'un magasin tampon (7) sont retirées du magasin intermédiaire ;
- les articles sont dépalettisés des palettes, notamment en couches, dans un dépalettiseur (5);
- puis les articles sont séparés;
- les articles séparés sont stockés avec un accès individuel dans un magasin tampon (7) pourvu d'un agencement de type boutique;
- le magasin tampon (7) est relié au dispositif de palettisation (13) afin d'alimenter celui-ci en fonction des commandes, les articles nécessaires à une commande étant déstockés individuellement et de manière ciblée selon une séquence spécifiée et transportés vers le dispositif de palettisation (13),
**caractérisé en ce que**
l'alimentation du magasin tampon (7) en nouveaux articles est effectuée à partir des palettes dans le magasin intermédiaire (4) par déstockage, dépalettisation et séparation par une adaptation dynamique de la quantité de déstockage et de dépalettisation minimale,
l'adaptation de la quantité de dépalettisation est effectuée de manière dynamique sur la base de l'état de remplissage avec les articles respectifs et du niveau de remplissage de l'allée (9) du magasin tampon (7) qui est associée au dépalettiseur (5),
la quantité de dépalettisation est réduite ou augmentée de manière dynamique sur la base de l'état de remplissage avec les articles respectifs et du niveau de remplissage de l'allée (9) du magasin tampon (7) qui est associée au dépalettiseur (5), les allées (9) fortement remplies du magasin tampon (7) étant alimentées plus souvent mais avec une quantité moindre d'articles par processus de réapprovisionnement,
une vérification, que la quantité d'articles planifiés jusqu'à présent et prévue pour la dépalettisation est suffisante pour l'allée respective ou le groupe d'articles respectif dans l'allée, étant effectuée statistiquement au moyen de données historiques et de mouvements d'articles habituels seulement peu de temps avant une dépalettisation planifiée.

2. Procédé selon la revendication 1, **caractérisé en ce qu'**une quantité maximale de dépalettisation n'est pas dépassée.

3. Procédé selon l'une des revendications précédentes, **caractérisé en ce que** les allées (9) du magasin tampon (7) qui sont moins remplies sont alimentées moins fréquemment mais avec une plus grande quantité d'articles par processus de réapprovisionnement.

4. Procédé selon l'une des revendications précédentes, **caractérisé en ce que** le magasin tampon (7) utilise des gerbeurs à niveaux (S) de type navette qui échangent les articles entre les allées (9) par le biais d'emplacements de convoyage transversaux dédiés (10) par un stockage plus profond.

5. Procédé selon l'une des revendications précédentes, **caractérisé en ce qu'**un nombre limité d'allées (9), notamment deux, du magasin tampon (7) sont raccordées à un palettiseur automatique (13).

6. Procédé selon l'une des revendications précédentes, **caractérisé en ce qu'**un nombre limité d'allées (9), notamment deux, du magasin tampon (7) sont raccordées à un dépalettiseur (5).

7. Procédé selon l'une des revendications précédentes, **caractérisé en ce que** le dispositif de palettisation est un palettiseur automatique (13).
